# EUROPEAN PATENT SPECIFICATION

(11) **EP 0 825 495 B1**
(45) Date of publication and mention of the grant of the patent: **14.08.2002**
(21) Application number: 95917468.1
(22) Date of filing: 26.04.1995
(51) Int. Cl.: G03G 15/01, H04N 1/50, H04N 1/29

(54) **ELECTROPHOTOGRAPHIC RECORDING DEVICE**
ELEKTROPHOTOGRAPHISCHES AUFZEICHNUNGSGERÄT
DISPOSITIF D'IMPRESSION ELECTROPHOTOGRAPHIQUE

(43) Date of publication of application: 25.02.1998
(73) Proprietor: Hitachi, Ltd., Chiyoda-ku, Tokyo 101 (JP); HITACHI KOKI CO., LTD., Chiyoda-ku, Tokyo (JP)
(72) Inventor: OKANO, Mamoru, Ibaraki 316 (JP); KOBAYASHI, Shinya, Ibaraki 310 (JP); HOSHI, Nobuyoshi, Ibaraki 312 (JP)
(74) Representative: Beetz & Partner Patentanwälte
(86) International application number: PCT/JP95/00824
(87) International publication number: WO 96/34320

(56) References cited:
- EP-A- 0 388 833
- EP-A- 0 496 599
- EP-A- 0 537 789
- EP-A- 0 585 521
- EP-A- 0 594 368
- JP-A- 4 056 946
- JP-A- 4 238 462
- JP-A- 4 262 660
- JP-A- 52 128 021
- JP-A- 56 008 112
- JP-A- 58 159 551

## Description

The invention relates to a electrophotographic printing apparatus for printing an image by an electrophotographic method and particularly, it relates to an exposure controlling device for the apparatus.

JP-A-58-159 551 describes an electrophotographic printing apparatus having two levels of electric potential for electrophotographic printing and two developing units. It has a single exposure unit.

Document JP-A-4-238 462 describes a comparison/correction circuit which compares data of a pixel array with plural patterns and effects notch elimination if the pixel pattern coincides with one of said notch patterns.

As a conventional electrophotographic method, there is a method (so-called a three level printing method) which comprises forming an electrostatic latent image consisting of two printing electric potential levels and a nonprinting electric potential level by one exposure and developing two colors. This method is disclosed in Japanese patent Laid-open print No. 48-37148. In this method, the electrostatic latent image consisting of electric potentials of three levels is formed by irradiating a photosensitive member with light modulated on the basis of image information after uniformly charging the photosensitive member surface by a charger.

In the method of printing the image by the electrophotographic method on the basis of image information, the electrostatic latent image consisting of printing levels and a non-printing level is formed by exposing the photosensitive member surface that is uniformly charged, then the electrostatic latent image is developed to form the image. The larger the exposure quantity of light irradiated to the photosensitive member is, the smaller the surface potential of the photosensitive member becomes. Therefore, when an exposure quantity is changed to form the electrostatic latent image of a line image with the same beam diameter, the larger the exposure quantity is, the larger the width of the latent image becomes, and the surface potential of the photosensitive member declines from the initial state.

In printing the line image, the line-width of an actual image becomes thicker than line-width shown by image data because an electric field by the spatial potential change of the electrostatic latent image itself is generated. In order to adjust this phenomenon, a method of changing the exposure quantity to be irradiated to the photosensitive member according to the kind of a printing image was invented in the conventional two level printing method. In the Japanese patent publication No. 62-26621, for example, a method is disclosed wherein the printing image is recognized as a line image followed by lowering the exposure quantity, when the photosensitive member surface is exposed to the light modulated on the basis of image information. As a result, thickening of lines after development is suppressed.

The three level printing method has a merit that a two color printing having no position dislocation can be done at the same printing speed as a single color printer. But, because a latent image for two colors is formed by one exposure, changing an exposure quantity and thickening of lines occur about one color in printing the line image. There is also another problem that thinning of lines in the other color occurs. The cause of this phenomenon is that when exposing in order to form the electrostatic latent image of the line image, the surface potential of the photosensitive member declines by a width which is larger than an optical beam diameter. Because the surface potential of a photosensitive member declines depending on the exposure quantity, the degree of thickening of lines and thinning of lines depends on the exposure quantity. Therefore, it is impossible to print proper images only by a conventional control method wherein the exposure quantity is varied after recognizing the kind of the printing image.

Thus, it is the object of the invention to provide an electrophotographic printing apparatus that can print desired images corresponding to image data by determining and controlling a proper exposure quantity in the three level printing method.

In order to achieve the above object, the present invention employs the following exposure unit for the electrophotographic printing apparatus. That is, the exposure unit comprises a recognition unit for recognizing the image ( color) of a printing image on the basis of input image data, a unit for operating the exposure data of every color that is printed on the basis of the recognition result, a unit for memorizing a proper exposure quantity of the exposure unit, which is set in advance on the basis of the characteristics of a developing agent and the sensitivity characteristics of the photosensitive member.

The apparatus may be provided with a unit for measuring the sensitivity characteristics of the photosensitive member. Also, the apparatus may be provided with a unit for calculating the proper exposure quantity for irradiation to the photosensitive member on the basis of a measured result of sensitivity characteristics.

The image data (dot information) from the host equipment, such as a large scaled computer or OA equipment, are sent to a memory in the above equipment according to the order of printing by the electrophotographic printing apparatus. The image pattern recognition equipment perceives the printing image which is part of the printing image represented by a dot arrangement stored in a memory, and forms exposure data for each color based on the perception. The exposure data are formed so that the image is printed in accordance with image data without thickening and thinning of images in any of the colors.

The sensitivity characteristics of the photosensitive member changes with the temperature of the photosensitive member and its state of use. A Unit for measuring the sensitivity characteristics of the photosensitive member is provided. By calculating the proper exposure quantity to be irradiated to the photosensitive member on the basis of the result of sensitivity characteristic measurement, a proper electrostatic latent image can be formed even in case the sensitivity characteristics of the photosensitive member changes.

Fig. 1 is a block diagram of a unit for controlling an exposure quantity used for the present invention.

Fig. 2 shows an example of a unit for recognizing an image used for the present invention.

Fig. 3 is the surface potential distribution of an ideal photosensitive member before developing.

Fig. 4 illustrates the exposure quantity of irradiation to the photosensitive member and the surface potential after exposure.

Fig. 5 is the whole diagram of an electrophotographic printing apparatus to which the present invention is applied.

Fig. 6 illustrates the image recognition method of the present invention.

Fig. 7 illustrates the image pattern to be detected.

Fig. 8 illustrates the image recognition method of the present invention.

Fig. 9 illustrates the image pattern to be detected.

Fig. 10 is the surface potential distribution of a photosensitive member after exposing by a conventional method.

Fig. 11 illustrates the exposure means of which the spot size of a beam can be changed.

Fig. 12 illustrates a unit for changing the spot size.

Fig. 13 illustrates the relationship between the exposure quantity of irradiation to the photosensitive member and a surface potential after exposure in case the sensitivities of the photosensitive members are different.

Fig. 14 illustrates a method of recognizing fine lines.

### Example 1

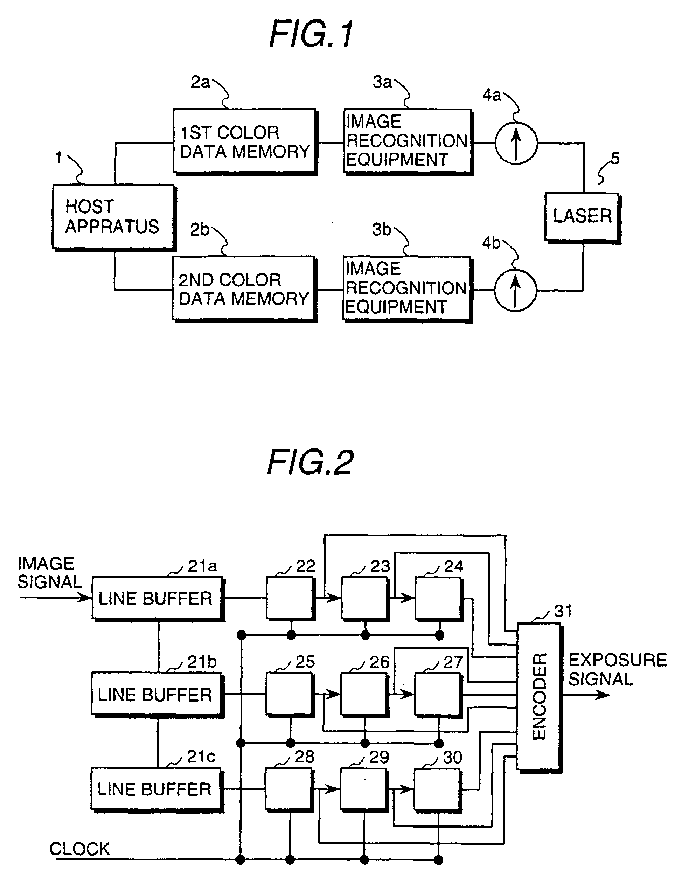

Embodiments of the present invention will now be described with reference to Fig. 1 through Fig. 13. In case a color image is printed by an electrophotographic printing apparatus, the electrophotographic printing apparatus receives the image information of every pixel output from the host computer. The electrophotographic printing apparatus forms the whole image on the basis of received image information.

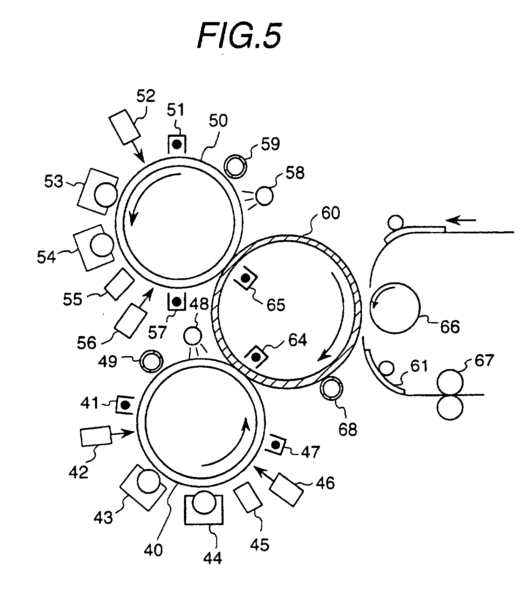

Fig. 5 is an example of the whole diagram of the electrophotographic printing apparatus according to the present invention. This apparatus can print image information for two colors on the photosensitive member surface by one exposure, to obtain a color image thereby. In the circumference of the first photosensitive member 40 along its rotating direction, there are disposed the first charging unit 41, the first main exposure unit 42, the first developing unit 43, the second developing unit 44, the first toner adhesion quantity sensor 45, the first auxiliary exposure unit 46, the first pre-transfer charging unit 47, the first charge releasing unit 48 and the first cleaning unit 49. Likewise, in the circumference of the second photosensitive member 50, there are disposed the second charging unit 51, the second main exposure unit 52, the third developing unit 53, the fourth developing unit 54, the second toner adhesion quantity sensor 55, the second auxiliary exposure unit 56, the second pre-transfer charging unit 57, the second charge releasing unit 58 and the second cleaning unit 59.

First, the printing method on the circumference of the first photosensitive member 40 is explained. The surface of the first photosensitive member 40 is charged uniformly by the first charging unit 41. Then, image information for two colors (electrostatic latent image) is formed by exposing of the photosensitive member at an appropriate exposure quantity, in one exposure by the first main exposure unit 42. The electric potential of the electrostatic latent image is' determined by changing the exposure quantity at the time of exposing.

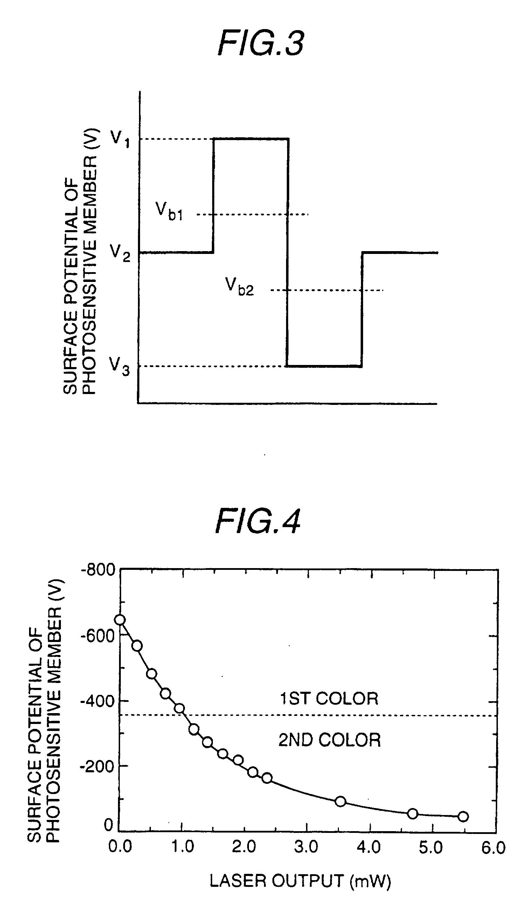

The relationship between the exposure quantity and the electric potential of the electrostatic latent image after exposure is measured in advance by using the photosensitive member and an optical system. The relationship is memorized in the first main exposure unit 42 and an exposure quantity operation unit in the second main exposure unit 52. Then, the electrostatic latent image formed in the present invention is explained by using Fig. 3, which expresses the potential distribution of an electrostatic latent image wherein the image data for two colors is formed on the photosensitive member by one exposure.

The photosensitive member surface is divided into parts where initial charge potential V₁ charged by a charging unit is maintained, one part of which surface potential becomes V₂ which is charged faintly and the other part of which surface potential becomes V₃ that is strongly exposed by a main exposure unit. The developing bias of the developing unit for the parts V₂ and V₃ is set so that it becomes proper electric potentials of Vb1 and Vb2, thereby a toner image is obtained through development. A toner does not adhere to the part of which a surface potential is V₂, and it becomes the background part of the printing image.

The exposure quantity that makes a surface potential V₂ after exposure is called the standard exposure quantity. The parts of which surface potentials after exposure are V₁ and V₃ are areas where the toner adheres. As mentioned above, the formed electrostatic latent images are developed by first developing unit 43 of bias electric potential V_{b1} and by second developing unit 44 of bias electric potential V_{b2}, respectively.

The toners accommodated in the first developing unit 43 close to the first photosensitive member 40 and the second developing unit 44 are two kinds of mutually different colors, one of which is positive charging toner and the other is negative charging toner. In this example, a developing agent containing a magenta (M) toner, which is positively charged is accommodated in the first developing unit 43, and a developing agent containing a cyan (C) toner, which is negatively charged is accommodated in the second developing unit 44. As for the developing agent, any agents which have been used such as a single component developing agent or a two component developing agent are acceptable.

If a toner quantity on the first photosensitive member 40 after development is detected by a sensor 45 for detecting the first toner adhesion quantity, picture quality is controlled to change the toner density of a developing agent or a developing bias potential on the basis of the detection results.

In the three level printing method, blue (B) cannot be represented because two kinds (C,M) of toners cannot adhere to the same pixel. Therefore, an electrostatic latent image is formed to the area where color mixing should be made, so as to develop with toners having mutually different polarities (that is, a latent image is formed so that an area to which toner is not adhered should be as small as possible), and after developing with two kinds of toners, the electric charge of one of the toners on the surface of the first photosensitive member 40 is properly removed or reduced. When the polarity of both toners are adjusted, the toners can be mixed by an electrostatic force due to the electric charge of toners. As an example of the mixing method, it can be conceivable that light is irradiated by using the first auxiliary exposure unit 46, to the positively charged toner image of the mixed color area of the first photosensitive member 40, thereby to reduce or remove the electric charge of the toner image. Thus, blue (B) is represented by mixing two kinds of toners.

For the first auxiliary exposure unit 46, optical systems having a laser light source, a lens system and a polygon motor or an LED array, etc. are exemplified. These elements can be used as the first main exposure unit 42. After auxiliary exposure, the charge polarity of the two kinds of toners are adjusted to one polarity by a pre-transfer charging unit 47, and a toner image is transferred to an intermediate transfer body 60 by an electrostatic force of corona charger 64.

A change of the charge polarity of toner before transfer to the intermediate transfer body 60 can be achieved by the corona discharging to the toner on the photosensitive member. There are corona discharging by direct current and a corona discharging by alternating current. A corona discharging by direct current is indispensable to give toner an electric charge. While it is possible to invert the charge polarity of the toner by charging with direct current. When the corona discharging by alternating current is overlapped on the corona discharging by direct current, the charge polarity of toners can be inverted more efficiently. When an alternating current is imposed on the electric current, the air resistivity declines and a corona discharging takes place easily so that an inversion of a charge polarity becomes easy. The exposure of the surface of the first photosensitive member 40 with the first auxiliary exposure unit 46 contributes to an improvement of the inversion efficiency of the charge polarity of toners before transfer.

After transferring a toner image to the intermediate transfer body 60, the surface of the first photosensitive member 40 is subjected to charge releasing by the first charge releasing unit 48 and to cleaning by the first cleaning unit 49.

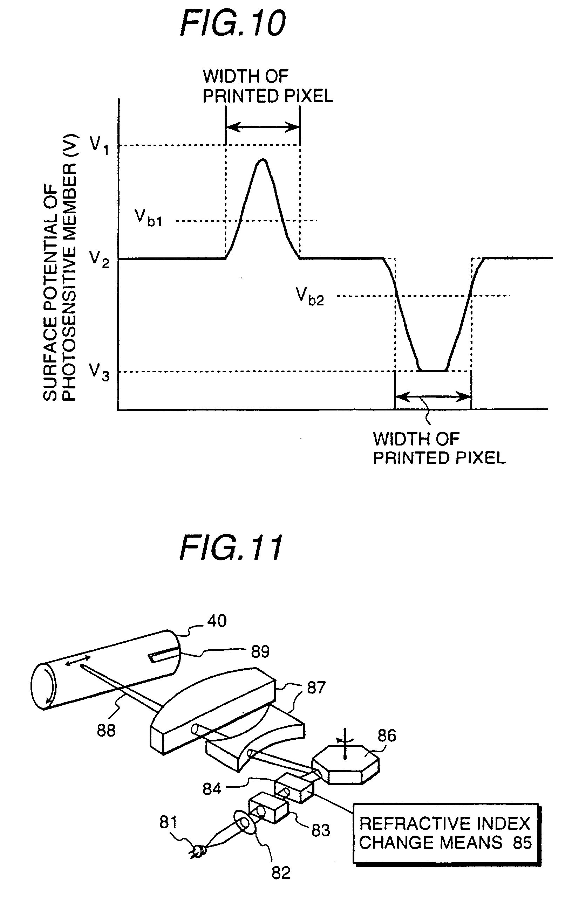

As mentioned above, a two color image is formed on the intermediate transfer body 60. However, there is a problem in this printing method that the toner image of the first color is easy to be thickened, and the toner image of the second color is easy to be thinned. This phenomenon is explained by using Fig. 4 and Fig. 10.

Fig. 4 illustrates the relationship of exposure quantity of light irradiated to the photosensitive member with the surface potential of the photosensitive member after exposure. Here, the case where the photosensitive member is charged negatively is described. As an exposure quantity increases, the rate of change of the surface potential of the photosensitive member with respect to the exposure quantity after exposure becomes smaller as the exposure increases. That is, in the small range of the exposure quantity (output of 1 mW or less), if the exposure quantity is changed little, the surface potential of the photosensitive member after the exposure can be greatly changed. But, it is necessary to greatly change the exposure quantity in order to change the surface potential of the photosensitive member at around -100 V.

Fig. 10 shows the electrostatic latent image of a fine line recorded on the surface of the photosensitive member. In the line image (at the part of surface potential V1) of the first color, the area which is not printed by the standard exposure quantity is exposed to form an- adjoining background (part of surface potential V2) so that the actual printing area is thinner than that of the printing area of one pixel. Even if an optical beam is blinked on the basis of the data of every pixel, an optical beam has an intensity distribution of Gauss-form, as for the printing area. Even if the area which is not printed is a normal pixel area, the printing area is irradiated with light beam larger than the width of one pixel. As shown in Fig. 10, even if the exposure quantity for making the surface potential V₂ of the non-printing area is small, surface potential V₁ of the printing area declines, if the area is irradiated with light. On the other hand, the line image (part of surface potential V₃) of the second color is the part that greatly reduces a surface potential after exposure. Therefore, since the surface potential for one pixel in this part declines and the exposure quantity of light to be irradiated to the photosensitive member enlarges, the degree of lowering of the surface potential enlarges. Because the optical beam has an intensity distribution of Gauss-form, the line width of the line image of the second color becomes thicker than the line-width of the line image of the first color. A high rate is there in line images such as a character in the image to be printed in the electrophotographic recording apparatus. Therefore, it is necessary to adjust the line-width between two colors of the line images which are actually printed in case information of two colors is printed by one exposure. For this purpose, a control is necessary for presence or absence of exposure, a beam shape, exposure time, etc. on the basis of printing pixel information.

There are dot and line images such as a solid area (face images) and a half tone of the images printed by the electrophotographic printing apparatus besides line images. Because the electric potential of the latent image abruptly changes within short spaces in the line images, the electric field is generated by the latent image itself. Therefore, toner is easy to adhere to the circumference part of the latent image, thereby to thicken the lines easily. On the other hand, the electric field by the latent image itself does not exist except for the circumference part of the image, as for the electric potential of the latent image in the face image. Therefore, toner is easier to adhere in the line image than in the face image. This phenomenon notably appears in development of the line image of the second color.

In development of the first color of the line image, toner more easily adheres in development of the face image, because there is only a small difference in the electric potential of the line images from that of the background, so that toner hardly adheres, as explained in Fig. 10.

In case of the dot images, toner hardly adheres, because a difference in electric potential of the background from that of the line images is small, irrespective of the first color or the second color. A control of the exposure is necessary to form an electric potential of the latent image, thereby to obtain a toner image, considering printing characteristics for every color of every kind of the images.

Next, a method of determining an exposure quantity on the basis of pixel information is explained by using Fig. 1. The image information being sent from the host equipment 1 such as a computer to an electrophotographic printing apparatus becomes pixel data for each color, and is stored in the first color data memory 2a and the second color data memory 2b. The exposure information in the main exposure device and an electric current quantity supplied to laser 5 are determined by using image recognition devices 3a and 3b that judge whether the pixel information is related to what part of the image. The output of laser 5 is changed by changing the electric current from electric current source 4a for recording the first color information, thereby to form an electric potential of the background and an electric potential of the first color (initial electric potential). And the luminous quantity of laser 5 is increased by supplying an electric current to electric current source 4b, to form an electric potential of the second color.

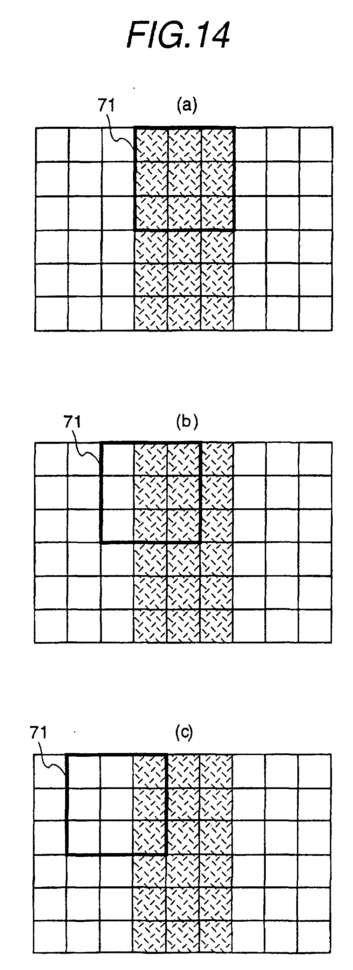

A method of recognizing a part of the image to be printed is described in the following. Fig. 14 shows an example of recognizing an image by using a template 71 of 3 × 3 of fine lines. Fig. 14 (a) shows that template 71 is overlapped on the fine lines. In this case, the exposure quantity of the central pixel (hereinafter called as a noticed pixel) of template 71 is zero in case a fine line is the first color, and the surface potential of the photosensitive member after exposure becomes V₃ in case the fine line is the second color, exposure quantity (this exposure quantity is defined as exposure quantity 1).

Fig. 14 (b) shows the state that template 71 is overlapped on part of the fine line, and that there is the noticed pixel on the fine line. When the fine line is the first color, the exposure quantity of the noticed pixel is zero, but when the fine line is the second color, the exposure charge is between exposure quantity 1 and the standard exposure quantity. This is to prevent thickening of fine lines by making the exposure quantity smaller than exposure quantity 1. The exposure quantity is determined, depending on the printing conditions of the electrophotographic printing apparatus.

Fig. 14 (c) shows that template 71 is overlapped on part of a fine line and that a noticed pixel comes off the upper part of fine lines. The exposure quantity of the noticed pixel in this case is one which is smaller than the standard exposure quantity in case fine lines are the first color. The exposure quantity is determined depending on printing conditions of the electrophotographic printing apparatus. Thinning of fine lines can be suppressed by exposing with a minute amount of exposure even if the noticed pixel is not a printing pixel. In case fine lines are the second color, the noticed pixel is exposed in the standard exposure quantity in accordance with image information.

Like this, thickening and thinning of fine lines can be suppressed by subjecting to exposure of a proper exposure amount for every color to be printed on the basis of the recognition result by template 71.

Next, a method of calculating the exposure quantity for actually exposing the photosensitive member surface is explained by using Fig. 2, which shows an example of image recognition equipment 3a and 3b using template 71.

The pixel information is sent from host equipment 1 to line buffer 21a. Line buffer 21a has the capacity for storing the pixel information of one line. Whenever scanning of one line ends, image information is sent to the next line buffer 21b or 21c. Latches 22 - 30 hold the data of one pixel. Synchronized by a clock, the data stored in line buffers 21a, 21b and 21c are sent to the latches on the right side for every one pixel. For example, the data of 21a are sent to the order of latches 22 , 23 and 24. The information (information held in latch 26) of the noticed pixel and eight data on the circumference are read by an encoder, the signals sent to electric current source 4a or 4b are calculated on the basis of the result.

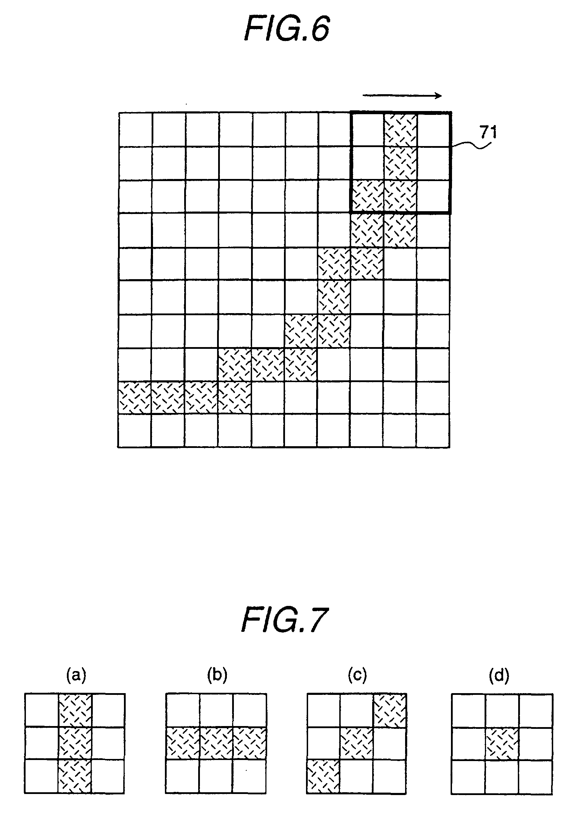

Fig. 6 illustrates an example of detecting the kind of an image by a pixel pattern of a part of a circle surrounded by template 71 of 3 × 3. Moving template 71 to the main scanning direction, the central pixel (noticed pixel) is judged whether the pixel belongs to what part of the image.

Fig. 7 illustrates the example of pixel information judged by the method shown in Fig. 6. In case all pixels surrounded by template 71 are printing pixels, the image is recognized as a face image. In the following, change of the exposure quantity according to the kind of images is explained. Fig. 7 (a) - (d) illustrate line images. Fig. 7 (a) and (b) are examples of which the noticed pixel is part of the line images. As mentioned above, in printing the second color, toner of line images adheres more easily, compared with the face images. Thus, by making the exposure quantity of the noticed pixel smaller than that of the face image when the noticed pixel is recognized as part of the line image, the gradient of the latent image electric potential becomes proper so that a toner adhesion quantity becomes proper and the line image in accordance with image information is obtained. The difference of the exposure quantity between the line image and the face image is determined depending on the resolution and the printing speed of the electrophotographic printing apparatus.

Fig. 7 (c) represents slanting lines. Generally speaking, in case of the slanting lines, connection of toner between pixels are weaker than the cases of vertical lines and side lines. Since overlapping of pixels of slanting lines is smaller than in vertical lines and horizontal lines, there is the case that the exposure quantity to slanting lines is set to be larger than that of the vertical lines and horizontal lines. Fig. 7 (d) expresses dot images. The electric potential of the electrostatic latent image of the dot image easy by approaches that of the background part of the circumference, because the exposure light beams do not continue and because the potential does not fall to the normal electric potential when the exposure quantity is lowered. Therefore, the exposure quantity for the dot image is such that strong exposure is the same as that for the face image. The above explanation is about the calculation method of the exposure quantity of the image of the second color.

Next the method for calculating the exposure quantity of the image of the first color is explained. Since the difference in electric potential of the latent image of the line image of the first color is small compared with the electric potential of the background of the circumference, a small amount of toner adheres at the time of developing. As was explained by Fig. 14 (c), in the states that template 71 overlaps part of the fine lines and that the noticed pixel comes off the upper part of the fine lines, thinning of lines is suppressed by exposing the noticed pixel with a minute amount of exposure. When the resolution of an electrophotographic printing apparatus increases, a template larger than template 71 of 3 × 3 is needed because the spaces between pixels becomes small.

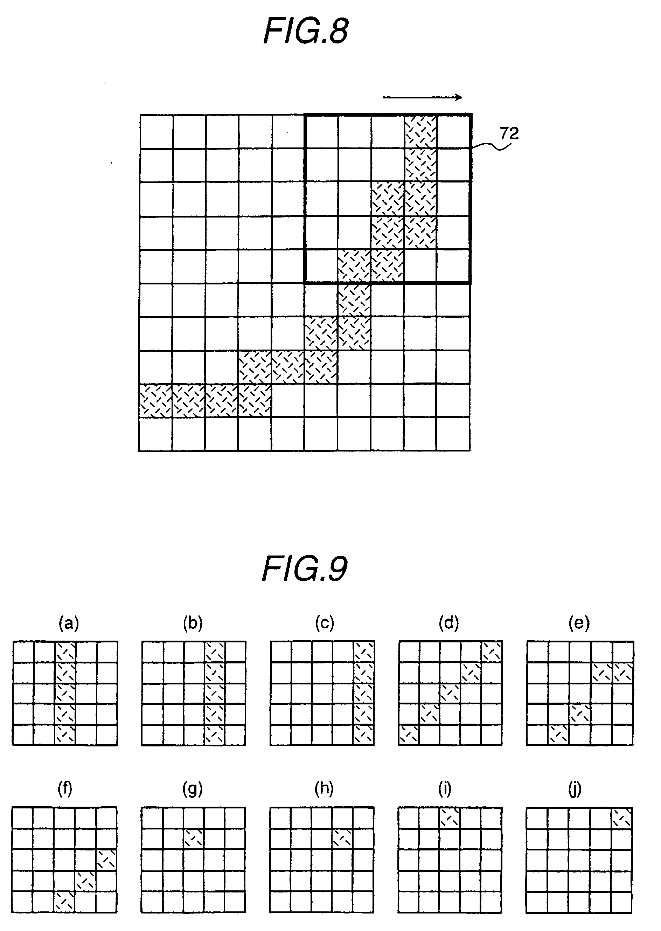

For example, the use of the template of 5 × 5 is explained. Fig. 8 shows an example of image recognition by using template 72 of 5 × 5. Fig. 9 expresses an example of pixel information. Figs. 9 (a) - (j) express line images. Fig. 9(a) shows that the noticed pixel is part of the line image, Fig. 9(b) shows an example of the noticed pixel which is remote by one pixel from the line image, and Fig. 9(c) shows an example of the noticed pixel which is remote by two pixels from the line image. Because in case of Fig. 9(a), the noticed pixel is a printing pixel, it is natural that the pixel is not exposed so as not to print the pixel. In case of Fig. 9(b), when a reference pixel is not exposed, line-width at the time of printing can be enlarged. In addition, when a notice pixel is exposed even in case of Fig. 9(c), line-width can be enlarged further. This is the same as the slanting lines shown in Figs. 9(d), (e) and (f), and line-width can be enlarged in the order of (d)→(e)→(f) by the method of creating exposure information. In the case where there is a dot image in a position that one pixel comes off noticed pixels like Figs. 9(g) and (h), the area of the dot image at the time of printing is enlarged when the noticed pixel is not exposed. In addition, when the noticed pixel is not exposed, if there is a dot image in a position remote by two pixels from the noticed pixel like Fig. 9(i) and (j), the area of the dot image is enlarged further. As mentioned above, the exposure method is determined so that the line-width of the line image of the first color and the area of the dot image become equal to those of the second color.

Because the space per one pixel is small in case of the electrophotographic printing apparatus with high resolution, it is necessary to use a template for the first color and the second color larger than one shown above. In general, the larger the template, the more the various recognition of images can be obtained. In accordance with the above-mentioned control, the color image of the line-width along with data sent from the host equipment to the electrophotographic printing apparatus can be actually printed.

Returning to Fig. 5, the method of printing the circumference of the second photosensitive member 50 is described. Even at the circumference of the second photosensitive member 50, likewise with the circumference of the first photosensitive member 40, the surface of the second photosensitive member 50 is uniformly charged by the second main charging unit 51 and then exposed at the predetermined exposure amount by the second main exposure unit 52. The third developing unit 53, the development method at the fourth developing unit 54, and the operation and function of the second toner adhesion quantity sensor 55 are the same as those at the circumference of the first photosensitive member 40.

After development, the toner image on the second photosensitive member 50 is transferred to the surface of intermediate transfer body 60 by an electrostatic force by unit of corona charger 65 without a position dislocation. The toner image on intermediate transfer body 60 is transferred by transfer roll 66 to which a voltage is applied, the roll having the surface 61 of the recording medium (cut paper, continuous paper, OHP sheet, etc.) which is transferred by transfer unit 62. Then, the recording medium is transferred to fixing unit 67, and the toner image is fixed on the surface of the recording medium 61 by heat and pressure to complete the color image. And, the toner that remains on intermediate transfer body 60 after transferring the toner image to recording medium 61 is removed by intermediate transfer body cleaning unit 68 for cleaning intermediate transfer body 60.

The above is the structure in which two sets of photosensitive member drums are installed, as shown in Fig. 5. A color toner image is formed on the middle transfer drum by forming the toner image of two colors on each of the photosensitive member drums and transferring the formed toner image on the middle transferring drum. The present invention is not limited to this structure. For example, the photosensitive member can be made a belt, four developing unit are arranged on the circumference of one photosensitive member belt, and the toner image of four colors can be formed while the photosensitive member rotates one time (the necessary over-all length of the belt is two pixels in this case.) or two times.

As mentioned above, a proper exposure quantity can be determined and a clear image can be printed by changing the sizes of the template used for image recognition in the area using positively polarized toner and an area using negatively polarized toner.

### Example 2

In this example, another method of correcting the thinning of image of the first color is explained by using Figs. 9 and 10. The cause of thinning of an image is that even if an optical beam is blinked on the basis of the data of every pixel, an intensity distribution exists in the optical beam, and thus the latent image electric potential in the area of the line image of the first color approaches the electric potential of the background. Therefore, it may be suggested that the diameter of an exposing optical beam is made small, in the pixel of the background which is a boundary of the first color or an exposure quantity is decreased. But, this method has a small effect to enlarge line-width, compared with making the exposure quantity zero, which was described in Example 1, then it is necessary to enlarge the difference in the size between template 71 of the first color and template 72 of the second color.

The method of changing the beam diameter of the exposure device on the basis of pixel data is explained by using Fig. 9. Like Figs. 9 (b) and (e), the beam diameter for irradiating the noticed pixel is controlled, when the noticed pixel is recognized as the pixel in the background adjoining the first color. As in the case of Figs. 9(c) and (f), even if the noticed pixel is recognized as the pixel in the background which is remote by two pixels from the first color, the beam diameter must be made small. In addition, if the size of template 72 is of 7 × 7, the noticed pixel can be recognized as the pixel in the background which is remote by three pixels from the pixel of the first color. When the beam diameter of the light is controlled in this case, the width of the line image is expanded. The method of recognizing the pixels of the second color and the method of exposing are similar to those of Example 1.

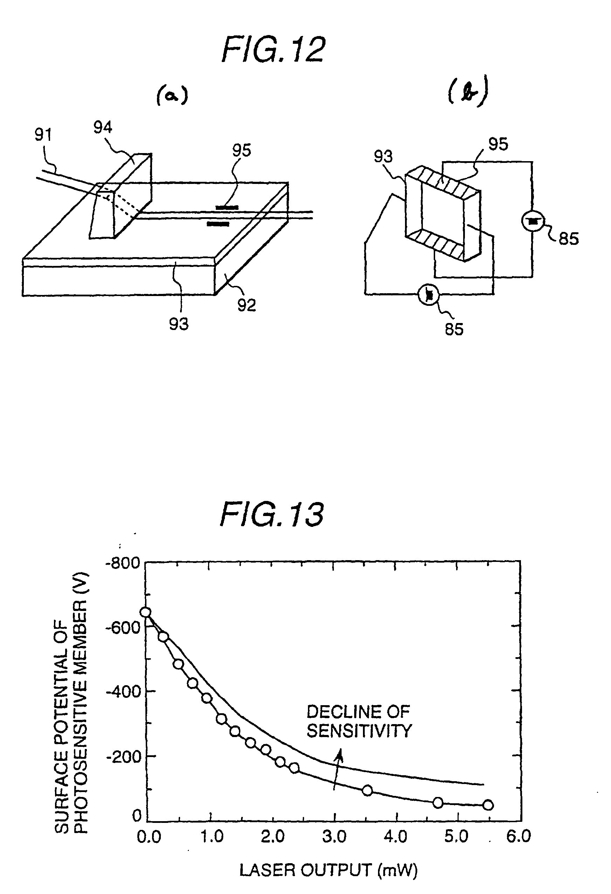

Then, a method of changing the beam diameter of exposure device is explained by using Fig. 11 and Fig. 12. Fig. 11 shows an optical system of the exposure device for exposing the photosensitive member. Here, 81 is a laser, 82 a collimator lens, 83 a lens, 84 a photofunctional element, 85 unit for changing the refractive index of photofunctional element 84, 86 a rotary mirror, 87 an Fθ lens, 88 an optical beam and 89 a surface potential sensor. The light of laser 81 is conducted to photofunctional element 84 and rotary mirror 86 through the lens of 82 and 83. Optical beam 88 scans the surface of photosensitive member 40 by rotating rotary mirror 86. Photofunctional element 84 on the halfway is made of a material of which refractive index changes when a voltage is applied to it from the outside. There are LiNbO₃, etc. for this material. The structure of the photofunctional element is explained by using Fig. 12.

Fig. 12 (a) is the diagram of the photofunctional element, wherein 91 is an optical beam, 92 a substrate (Ti, etc. are used), 93 a waveguide (TiNbO₃, etc.), 94 a prism and 95 an electrode. Optical beam 91 impinges on wave layer 93 formed on substrate 92 through prism 94, and propagates through the wave layer. Electrode 95 is provided with wave layer 93 around electrode 95. Fig. 12 (b) shows segmented parts where electrode 95 exists around wave layer 93. On the basis of a signal which is issued for changing the beam diameter to electrode 95 and which is provided by the result of image recognition around the wave layer 93, the voltage of power source 85 for changing the refractive index is changed so that the refractive index of the wave layer is changed. The refractive index changes the shape of optical beam 91 on the way of propagation. Because the changing degree of the refractive index depends on the voltage applied, the beam diameter of optical beam 91 can be changed by adjusting the voltage in the top and bottom directions and in the right and left directions of the wave layer shown in the figure.

As mentioned above, thinning of the line image of the first color can be suppressed by adjusting the beam diameter of light to be irradiated to the pixels at the boundary of the first color and the background, and the color image of line-width as the pixel information from the host equipment can be actually printed.

The same effect as obtained by the above method is obtained by decreasing the exposure quantity for the above pixels. The changing quantity of the exposure quantity depends on the sensitivity of the photosensitive member. The sensitivity of the photosensitive member is determined by the temperature of using environment of the photosensitive member and using frequency, etc..

Fig. 13 shows relationship between the exposure quantity and the surface potential of the photosensitive member after the exposure in the case where the sensitivity of the photosensitive member changes. The initial charge potential is made constant at-650 V. As a factor for reducing the sensitivity of the photosensitive member, there are exemplified the increase in using frequency (the number of printing pages) and lowering of the temperature of using environment. It is necessary to set up sequence for measuring the sensitivity of the photosensitive member periodically because the surface potential of the photosensitive member after exposure determines the printing image.

A method of measuring the sensitivity of a photosensitive member is explained by using Fig. 11. Photosensitive member 40 is charged uniformly, followed by scanning with rotary mirror 86, and then the intensity of the light of laser 81 is increased gradually. Then, the surface potential of the photosensitive member after the exposure is measured by surface potential sensor 89 to obtain data like Fig. 13. The color image is obtained by determining then exposure quantity and the developing bias electric potential are determined on the basis of the result and the developing characteristics of the developing agent. Picture quality control on the basis of image data becomes sure by establishing this periodic sequence.

### Industrial Applicability

In the electrophotographic printing apparatus for obtaining a color image using several kinds of toners having different charging characteristics, disposed is unit for determining the method of recognizing part of what image of the image shown by the pixel data which are sent from the host equipment. The method is determined for every color, and on the basis of the result of recognition, the exposure data of every color for printing is created or an exposure beam diameter is controlled. As a result, the color image of the line-width can be actually printed in accordance with data from the host equipment to the electrophotographic printing apparatus.

## Claims

1. An electrophotographic printing apparatus comprising:
a charging unit (41, 51) for uniformly charging a photosensitive member (40, 41) surface,
an exposure unit (42, 52) for forming an electrostatic latent image having at least three levels of electric potential on the photosensitive member surface in accordance with input image information,
a developing unit (43, 44, 53, 54) for developing said electrostatic latent image using two or more kinds of toners with mutually different charge polarities to form a toner image,
a template determination unit (3a, 3b) for determining a recognising template (71) on the basis of the pixel data of said image information,
a recognising unit (3a, 3b) for recognising the kind of an image pattern from said pixel data by using the determined recognising template, and
a unit (31) for determining an exposure quantity by calculating the exposure quantity of each pixel on the basis of the recognised kind of image pattern.

2. The apparatus of claim 1, wherein said template determination unit selects a small template when it judges, on the basis of said pixel data, that the area is to be exposed by an exposure amount which is larger than the standard exposure quantity of irradiation to the area to which toner does not adhere, and when it judges that the area is to be exposed by an exposure amount which is smaller than the standard exposure quantity, a large template is selected.

3. The apparatus of claim 1, wherein said recognising unit recognises a line image, a face image and a dot image based on input pixel data, and said exposure quantity determination mean calculates an exposure information so as to make smaller the number of pixels to be actually exposed on the photosensitive member by the standard exposure quantity than the number of exposure pixels of the input pixel data to be exposed in the standard exposure quantity.

4. The apparatus of claim 1, wherein the recognising unit recognises a line image, a face image and a dot image based on input pixel data, and said exposure quantity determination unit calculates an exposure information on the basis of the recognition result so that the exposure quantity for the exposed pixel which adjoins the not exposed pixel is smaller than the standard exposure quantity.

5. The apparatus of claim 1, wherein said recognising unit recognises, based on input pixel data, a line image, a face image and a dot image, and said exposure quantity determination unit is further provided with a changing unit (84, 85, 91-95) for changing the optical beam diameter so that the optical beam diameter for exposing pixels that adjoin the not exposed pixels is made smaller than that for exposing pixels that adjoin exposed pixel.

6. The apparatus of claim 1, wherein said recognising unit recognises, based on input pixel data, a line image, a face image and a dot image, and the said exposure quantity determination unit calculates an exposure information based on the result so that the exposure quantity of a line image area is made smaller than the exposure quantity of a face image and a dot image area in the image area to be exposed by an exposure amount larger than the standard exposure quantity.

7. The apparatus of claim 1, which further comprises a characteristic measurement unit for measuring the sensitivity characteristics of said photosensitive member, wherein said exposure quantity determination unit calculates the exposure quantity of irradiation to said photosensitive member on the basis of the measured sensitivity characteristics.

8. The apparatus of claim 7, wherein said characteristic measurement unit is composed of a unit for stepwisely changing the exposure quantity in the main exposure device and a unit for measuring the surface potential of the photosensitive member after exposure.

9. An apparatus according to claim 1, comprising:
a plurality of developing units for developing said electrostatic latent image to form a toner image using at least two kinds of toners each having different charging characteristics, and
wherein the recognition unit recognises a line image, a face image and a dot image on the basis of the pixel data by using said determined template for recognition.

## Patentansprüche

1. Elektrophotographische Druckvorrichtung mit
einer Ladeeinheit (41, 51) zum gleichförmigen Laden einer Oberfläche eines photoempfindlichen Bauteils (40, 41),
einer Belichtungseinheit (42, 52) zum Bilden eines elektrostatischen latenten Bilds mit zumindest drei Potentialpegeln auf der Oberfläche des photoempfindlichen Bauteils nach Maßgabe einer eingegebenen Bildinformation,
einer Entwicklungseinheit (43, 44, 53, 54) zum Entwickeln des elektrostatischen latenten Bilds unter Verwendung von zwei oder mehr Tonern mit zueinander unterschiedlichen Ladungspolaritäten, um ein Tonerbild zu bilden,
einer Schablonenbestimmungseinheit (3a, 3b) zum Bestimmen einer Erkennungsschablone (71) auf der Grundlage der Pixeldaten der Bildinformation,
einer Erkennungseinheit (3a, 3b) zum Erkennen der Art eines Bildmusters der Pixeldaten unter Verwendung der bestimmten Erkennungsschablone, und
einer Einheit (31) zum Bestimmen einer Belichtungsmenge durch Berechnen der Belichtungsmenge eines jeden Pixels auf der Grundlage der erkannten Bildmusterart.

2. Vorrichtung nach Anspruch 1, bei der die Schablonenbestimmungseinheit eine kleine Schablone wählt, wenn sie auf der Grundlage der Pixeldaten feststellt, daß die Fläche durch eine Belichtungsmenge zu belichten ist, die größer als die übliche Belichtungsmenge der Bestrahlung einer Fläche ist, an der Toner nicht anhaftet, und eine große Schablone auswählt, wenn sie feststellt, daß die Fläche durch eine Belichtungsmenge zu belichten ist, die kleiner als die übliche Belichtungsmenge ist.

3. Vorrichtung nach Anspruch 1, bei der die Erkennungseinheit ein Linienbild, ein Flächenbild und ein Punktbild auf der Grundlage der eingegebenen Pixeldaten erkennt, und die Belichtungsmengenbestimmungseinheit eine Belichtungsinformation so berechnet, daß die Anzahl der mit der üblichen Belichtungsmenge zu belichtenden Pixel auf dem photoempfindlichen Bauteil kleiner wird als die Anzahl der Belichtungspixel der eingegebenen Pixeldaten, die mit der üblichen Belichtungsmenge zu belichten sind.

4. Vorrichtung nach Anspruch 1, bei der die Erkennungseinheit ein Linienbild, ein Flächenbild und ein Punktbild auf der Grundlage der eingegebenen Pixeldaten erkennt und die Belichtungsmengenbestimmungseinheit auf der Grundlage des Erkennungsergebnisses eine Belichtungsinformation so berechnet, daß die Belichtungsmenge für ein belichtetes Pixel, das an ein nicht belichtetes Pixel angrenzt, kleiner ist als die übliche Belichtungsmenge.

5. Vorrichtung nach Anspruch 1, bei der die Erkennungseinheit auf der Grundlage der eingegebenen Pixeldaten ein Linienbild, ein Flächenbild und ein Punktbild erkennt und die Belichtungsmengenbestimmungseinheit außerdem mit einer Änderungseinheit (84, 85, 91-95) versehen ist zum Ändern des Durchmessers des optischen Strahls so, daß der Durchmesser des optischen Strahls für Belichtungspixel, die an nicht belichtete Pixel angrenzen, kleiner ist als derjenige für Belichtungspixel, die an belichtete Pixel angrenzen.

6. Vorrichtung nach Anspruch 1, bei der die Erkennungseinheit auf der Grundlage der eingegebenen Pixeldaten ein Linienbild, ein Flächenbild und ein Punktbild erkennt und die Belichtungsmengenbestimmungseinheit auf der Grundlage des Ergebnisses eine Belichtungsinformation so berechnet, daß die Belichtungsmenge einer Linienbildfläche kleiner ist als die Belichtungsmenge einer Flächenbild- und einer Punktbildfläche in der Bildfläche, die mit einer Belichtungsmenge zu belichten ist, die größer ist als die übliche Belichtungsmenge.

7. Vorrichtung nach Anspruch 1, die außerdem eine Kennwertmeßeinheit zum Messen des Empfindlichkeitskennwerts des photoempfindlichen Bauteils aufweist, wobei die Belichtungsmengenbestimmungseinheit die Belichtungsmenge der Bestrahlung des photoempfindlichen Bauteils auf der Grundlage des gemessenen Empfindlichkeitskennwerts berechnet.

8. Vorrichtung nach Anspruch 7, bei der die Kennwertmeßeinheit eine Einheit zum schrittweisen Ändern der Belichtungsmenge in der Hauptbelichtungsvorrichtung aufweist und eine Einheit zum Messen des Oberflächenpotentials des photoempfindlichen Bauteils nach der Belichtung.

9. Vorrichtung nach Anspruch 1 mit:
mehreren Entwicklungseinheiten zum Entwickeln des elektrostatischen latenten Bilds zum Bilden eines Tonerbilds unter Verwendung von zumindest zwei Arten von Tonern, die unterschiedliche Ladekennwerte haben, und
wobei die Erkennungseinheit ein Linienbild, ein Flächenbild und ein Punktbild auf der Grundlage der Pixeldaten erkennt, wobei für die Erkennung die bestimmte Schablone verwendet wird.

## Revendications

1. Dispositif d'impression électrophotographique, comportant :
une unité de charge (41, 51) pour charger uniformément une surface d'un élément photosensible (40, 41),
une unité d'exposition (42, 52) pour former une image latente électrostatique ayant au moins trois niveaux de potentiel électrique sur la surface d'élément photosensible conformément à des informations d'image d'entrée,
une unité de développement (43, 44, 53, 54) pour développer ladite image latente électrostatique en utilisant deux ou plus de deux types de toners ayant des polarités de charge mutuellement différentes pour former une image de toner,
une unité de détermination de calibre (3a, 3b) pour déterminer un calibre de reconnaissance (71) sur la base des données de pixel desdites informations d'image,
une unité de reconnaissance (3a, 3b) pour reconnaître le type d'un motif d'image à partir desdites données de pixel en utilisant le calibre de reconnaissance déterminé, et
une unité (31) pour déterminer une quantité d'exposition en calculant la quantité d'exposition de chaque pixel sur la base du type reconnu de motif d'image.

2. Dispositif selon la revendication 1, dans lequel ladite unité de détermination de calibre sélectionne un petit calibre lorsqu'on juge, sur la base desdites données de pixel, que la zone est à exposer par une quantité d'exposition qui est plus grande que la quantité d'exposition standard d'irradiation sur la zone à laquelle le toner n'adhère pas, et lorsqu'on juge que la zone est à exposer par une quantité d'exposition qui est plus petite que la quantité d'exposition standard, un grand calibre est sélectionné.

3. Dispositif selon la revendication 1, dans lequel ladite unité de reconnaissance reconnaît une image de lignes, une image de face et une image de points sur la base des données de pixel d'entrée, et lesdits moyens de détermination de quantité d'exposition calculent des informations d'exposition de manière à rendre le nombre de pixels à exposer réellement sur l'élément photosensible par la quantité d'exposition standard plus petit que le nombre de pixels d'exposition des données de pixel d'entrée à exposer par la quantité d'exposition standard.

4. Dispositif selon la revendication 1, dans lequel l'unité de reconnaissance reconnaît une image de lignes, une image de face et une image de points sur la base des données de pixel d'entrée, et ladite unité de détermination de quantité d'exposition calcule des informations d'exposition sur la base du résultat de reconnaissance de sorte que la quantité d'exposition pour le pixel exposé qui est contigu au pixel non-exposé est plus petite que la quantité d'exposition standard.

5. Dispositif selon la revendication 1, dans lequel ladite unité de reconnaissance reconnaît, sur la base des données de pixel d'entrée, une image de lignes, une image de face et une image de points, ladite unité de détermination de quantité d'exposition est de plus munie d'une unité de changement (84, 85, 91-95) pour changer le diamètre de faisceau optique de sorte que le diamètre de faisceau optique destiné à exposer les pixels qui sont contigus aux pixels non-exposés est rendu plus petit que celui destiné à exposer les pixels qui sont contigus à un pixel exposé.

6. Dispositif selon la revendication 1, dans lequel ladite unité de reconnaissance reconnaît, sur la base des données de pixel d'entrée, une image de lignes, une image de face et une image de points, et ladite unité de détermination de quantité d'exposition calcule des informations d'exposition sur la base du résultat de sorte que la quantité d'exposition d'une zone d'image de lignes est rendue plus petite que la quantité d'exposition d'une image de face et d'une zone d'image de points dans la zone d'image à exposer par une quantité d'exposition plus grande que la quantité d'exposition standard.

7. Dispositif selon la revendication 1, qui comporte de plus une unité de mesure de caractéristiques pour mesurer les caractéristiques de sensibilité dudit élément photosensible, dans lequel ladite unité de détermination de quantité d'exposition calcule la quantité d'exposition d'irradiation sur ledit élément photosensible sur la base des caractéristiques de sensibilité mesurées.

8. Dispositif selon la revendication 7, dans lequel ladite unité de mesure de caractéristique est constituée d'une unité destinée à changer pas à pas la quantité d'exposition dans le dispositif d'exposition principal et d'une unité destinée à mesurer le potentiel de surface de l'élément photosensible après exposition.

9. Dispositif selon la revendication 1, comportant :
une pluralité d'unités de développement pour développer ladite image latente électrostatique afin de former une image de toner en utilisant au moins deux types de toner ayant chacun des -caractéristiques de charge différentes, et
dans lequel l'unité de reconnaissance reconnaît une image de lignes, une image de face et une image de points sur la base des données de pixel en utilisant ledit calibre déterminé de reconnaissance.
